(19) **Europäisches Patentamt / European Patent Office / Office européen des brevets**

(11) **EP 3 654 059 B1**

(12) **FASCICULE DE BREVET EUROPEEN**

(45) Date de publication et mention
de la délivrance du brevet:
**10.05.2023 Bulletin 2023/19**

(21) Numéro de dépôt: **19209041.3**

(22) Date de dépôt: **14.11.2019**

(51) Classification Internationale des Brevets (IPC):
**G01S 13/935** *(2020.01)*     **G01S 13/933** *(2020.01)*

(52) Classification Coopérative des Brevets (CPC):
**G01S 13/5244; G01S 7/2926; G01S 7/414;
G01S 13/288; G01S 13/42; G01S 13/48;
G01S 13/584; G01S 13/933; G01S 13/935**

(54) **PROCÉDÉ DE CRÉATION D'AU MOINS UNE VOIE DE RÉCEPTION VIRTUELLE PAR L'UTILISATION D'UNE ANTENNE RADAR ET SYSTÈME RADAR**

VERFAHREN ZUR ERZEUGUNG MINDESTENS EINES VIRTUELLEN EMPFANGSWEGS UNTER VERWENDUNG EINER RADARANTENNE, UND RADARSYSTEM

METHOD FOR CREATING AT LEAST ONE VIRTUAL RECEPTION CHANNEL THROUGH THE USE OF A RADAR ANTENNA AND RADAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2018 FR 1871846**

(43) Date de publication de la demande:
**20.05.2020 Bulletin 2020/21**

(73) Titulaire: **Thales**
**92400 Courbevoie (FR)**

(72) Inventeurs:
• **COTTRON, Rodolphe**
  **33700 MERIGNAC (FR)**
• **GARREC, Patrick**
  **33700 MERIGNAC (FR)**
• **GOY, Philippe**
  **33700 MERIGNAC (FR)**

(74) Mandataire: **Atout PI Laplace
Immeuble "Visium"
22, avenue Aristide Briand
94117 Arcueil Cedex (FR)**

(56) Documents cités:
**EP-A1- 1 522 871      EP-A1- 2 816 369
US-A1- 2010 214 152      US-A1- 2010 328 157**

**Description**

L'invention relève du domaine de la détection par radar.

Plus particulièrement l'invention relève du domaine de la détection par radar aéroporté sur avions de surveillance, aéronefs et hélicoptères.

Les radars aéroportés modernes doivent détecter des cibles en présence d'échos parasites et de brouillage électronique. Les échos de sol se retrouvent à tout angle et distance, en plus d'avoir un décalage Doppler provoqué par le déplacement du porteur du radar.

Le procédé adaptatif espace-temps (en anglais Space-Time Adaptive Processing ou STAP), connu de l'homme de l'art, est un traitement informatique des échos d'une antenne-réseau à commande de phase sur plusieurs impulsions cohérentes. Ce procédé permet la détection d'une cible se déplaçant à basse vitesse se cachant dans le fouillis radar ou dans le brouillage électronique. Pour cela, il utilise une approche qui analyse les variations spatiales et temporelles des échos, mais qui nécessite l'utilisation de plusieurs voies de réception.

L'utilisation de deux voies de réception permet seulement de localiser ou de filtrer le fouillis de sol mais ne permet pas de réaliser les deux traitements simultanément ou séquentiellement. Dans le cas où la cible d'intérêt est située à une altitude égale ou inférieure à l'altitude du radar la détection et la localisation par le procédé STAP requiert au moins 3 voies de réception sur l'axe vertical. Pour des raisons d'encombrement et de coût global du radar, travailler avec une antenne possédant 3 voies d'émission est contraignant.

US 2010/214152 A1 décrit un procédé permettant de séparer le fouillis de sol d'un signal d'intérêt en encodant une impulsion émise par un système radar à l'aide d'une séquence de code d'émission TX, de manière à ce que la forme d'onde du signal d'intérêt puisse être séparable et orthogonale à celle associée au fouillis de sol. La séquence de code d'émission TX est séparée en deux séquences de réception RX, une associée au fouillis et une associée au signal d'intérêt. Les deux séquences de réception RX sont corrélées au signal reçu afin de séparer le signal d'intérêt du fouillis de sol. Ce document décrit une forme d'onde à bruit aléatoire sous la forme d'une séquence ou code aléatoire de valeurs de phase.

Par ailleurs, US 2010/328157 A1 décrit un procédé de création d'un réseau d'antennes virtuelles à partir d'un réseau d'antennes 1, 2, ..., N émettant chacune simultanément des formes d'ondes différentes et orthogonales entre elles. Dans ce document l'émission et la réception sont co-localisées et le codage des ondes orthogonales est utilisé lors de la compression des impulsions reçues par les voies de réception avec les formes d'ondes orthogonales. Cependant, dans ces méthodes, le niveau des lobes secondaire des impulsions compressés est élevé. On note qu'il est connu de EP 2,816,369 A1 de réduire le niveau les lobes secondaires de la fonction d'ambiguïté notamment d'un radar à émissions multiples simultanées en utilisant plusieurs récurrences dans des directions différentes en utilisant des formes d'ondes à émission multiples codées en fréquence.

L'invention vise à pallier certains des problèmes précités c'est-à-dire utiliser une antenne moins encombrante et moins coûteuse pour réaliser un traitement STAP permettant de réduire le niveau des lobes secondaires des impulsions compressées. A cet effet, l'invention a pour objet un procédé tel que décrit par les revendications.

L'invention a également pour objet un système mettant en oeuvre ce procédé.

RESUME

Ainsi, un objet de l'invention est un procédé de création d'une voie de réception virtuelle dans un système radar comprenant une antenne possédant deux voies de réception physiques ($1_r$, $2_r$) espacées d'une distance d selon une direction x, deux voies d'émission ($1_e$, $2_e$) espacées d'une même distance d selon la même direction x et des moyens de traitement, le procédé comprenant :

    a. la sélection dynamique de deux formes d'ondes différentes à bruit aléatoire sous la forme d'une séquence ou code aléatoire de valeurs de phase, orthogonales entre elles ;

    b. la génération d'une impulsion radar de même longueur d'onde centrale dans chaque voie d'émission, chacune des voies d'émission émettant une desdites deux formes d'ondes différente;

    c. l'acquisition par les voies de réception des échos provenant des impulsions émises par les voies d'émission et réfléchies par au moins une cible ;

    d. la compression des impulsions par filtrage adapté des échos acquis par chaque voie de réception physique en réalisant leurs corrélations avec chacune des formes d'ondes générées dans les voies d'émission; et

    e. la répétition des étapes a) à c) en changeant aléatoirement une des valeurs de chacun des codes de phase associés aux formes d'ondes générées jusqu'à obtenir une stabilisation du niveau des lobes secondaires de toutes les impulsions compressées.

Selon des modes particuliers d'un tel procédé :

EP 3 654 059 B1

- on génère dans chaque voie d'émission une forme d'onde à bruit aléatoire sous la forme d'une séquence ou code aléatoire de valeurs de phase.
- le code aléatoire de la phase des formes d'onde est binaire.
- le code aléatoire de la phase des formes d'onde peut prendre au moins 3 valeurs.
- les étapes a) à c) sont répétées en changeant aléatoirement une des valeurs de chacun des codes de phase associés aux formes d'ondes générées jusqu'à obtenir une stabilisation du niveau des lobes secondaires de toutes les impulsions compressées.
- on réalise un traitement Doppler ou de Post-intégration suivant l'axe des récurrences en changeant les codes de phase de manière à diminuer le niveau de leurs lobes secondaires.
- le niveau des lobes secondaires des impulsions compressées est optimisé par filtrage de Weiner.

Un autre objet de l'invention est un système radar pour la mise en oeuvre d'un procédé de création d'une voie de réception virtuelle comprenant une antenne possédant deux voies de réception physiques ($1_r$, $2_r$) espacées d'une distance $d$ selon une direction $x$, deux voies d'émission ($1_e$, $2_e$) espacées d'une même distance $d$ selon la même direction $x$ et des moyens de traitement, caractérisée en ce que ledit système radar est configuré pour que, dans chaque voie d'émission sont générées des impulsions radars de même longueur d'onde centrale, chacune des voies d'émission émettant des formes d'onde différentes à bruit aléatoire sous la forme d'une séquence ou code aléatoire de valeurs de phase, choisies dynamiquement, orthogonales aux formes d'onde des impulsions émises par l'autre voie d'émission, les moyens de traitement étant adaptés de manière à réaliser la compression par filtrage adapté des impulsions des échos acquis par chaque voie de réception physique en réalisant leurs corrélations avec chacune des formes d'ondes générées dans les voies d'émission, , chacune des voies d'émission étant en outre configurée pour changer aléatoirement une des valeurs de chacun des codes de phase associés aux formes d'ondes générées jusqu'à obtenir une stabilisation du niveau des lobes secondaires de toutes les impulsions compressées.

Selon des modes de réalisation particuliers d'un tel système :

- les voies d'émission et de réception sont co-localisés
- chacune des voies d'émissions comprend un générateur de forme d'ondes générant les formes d'ondes orthogonales, un mélangeur mélangeant un signal provenant d'un oscillateur local et un signal provenant du générateur de forme d'onde, un amplificateur amplifiant le signal provenant du mélangeur, le signal amplifié permettant l'émission d'impulsions radars par l'antenne par le biais d'un circulateur permettant à l'antenne de fonctionner en émission et réception et chacune des n voies de réception comprend un amplificateur amplifiant le signal reçu par la voie d'émission, un mélangeur mélangeant un signal provenant d'un oscillateur local et le signal provenant de l'amplificateur de la voie de réception, un Démodulateur Amplitude Phase / Convertisseur Analogique Numérique permettant aux moyens de traitements de réaliser la compression numérique des impulsions par filtrage adapté.

BREVE DESCRIPTION DES DESSINS

D'autres caractéristiques, détails et avantages de l'invention ressortiront à la lecture de la description faite en référence aux dessins annexés donnés à titre d'exemple et qui représentent, respectivement :

- La figure 1, un schéma du problème technique à résoudre.
- La figure 2A, un schéma de la géométrie d'un système radar connu de l'art antérieur et d'une cible d'intérêt;
- La figure 2B, un schéma de la géométrie d'un système radar selon un mode de réalisation de l'invention et d'une cible d'intérêt;
- La figure 3, un schéma du système radar du mode de réalisation de la figure 1 ;
- La figure 4, deux formes d'ondes émises par le système radar du mode de réalisation de la figure 1 ;
- La figure 5A et 5B, des impulsions après filtrages adaptés avec une et deux voies d'émissions actives, respectivement ;
- Les figures 6A, 6B et 6C, les niveaux des lobes secondaires d'une impulsion après filtrage adapté sans optimisation, avec optimisation du code aléatoire et avec optimisation par traitement suivant l'axe des récurrences, respectivement.

Les références aux figures, quand elles sont identiques, correspondent aux mêmes éléments.
Dans les figures, sauf contre-indication, les éléments ne sont pas à l'échelle.

DESCRIPTION DETAILLE DE L'INVENTION

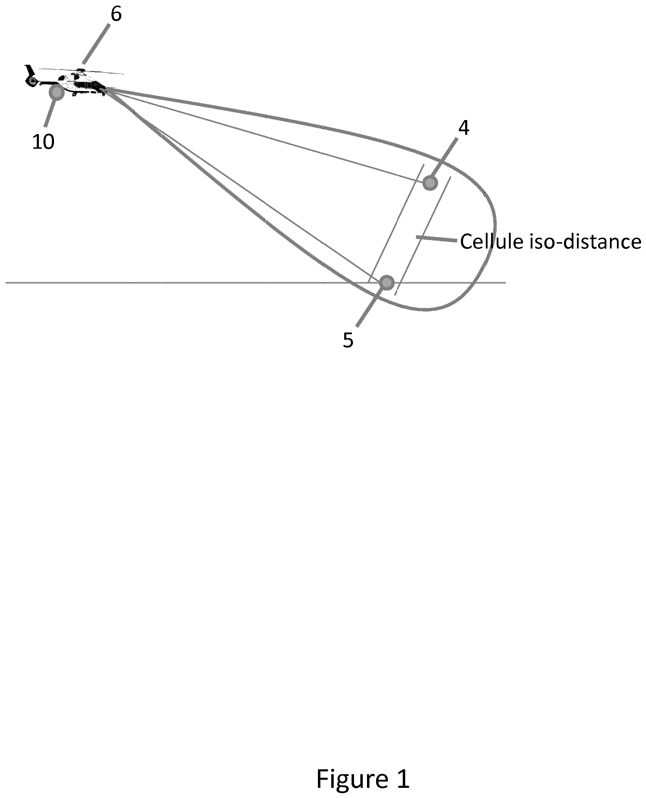

La figure 1 illustre le problème technique à résoudre. On cherche à détecter et localiser des cibles 4 de faible SER à partir d'un système radar 10 aéroporté sur avion de surveillance ou sur hélicoptère 6.

La configuration contraignante est celle pour laquelle la cible d'intérêt est située à une altitude égale ou inférieure à l'altitude du radar, la cible pouvant être un aéronef, un drone ou un câble de type haute tension. En effet, la cible n'est alors pas située sur bruit thermique dans une carte de détection distance-vitesse connue de l'homme de l'art, mais est en concurrence avec le fouillis de sol 5 situé à la même distance radiale que la cible, c'est-à-dire que la puissance de la cible est inférieure à la puissance du fouillis ou au mieux du même ordre de grandeur. Comme indiqué précédemment, un problème à résoudre est d'arriver à effectuer les détections et localisations avec une antenne ayant seulement deux voies de réception matérielles sur l'axe vertical, et cela notamment pour répondre à des contraintes de coût global du radar mais aussi à des contraintes d'encombrement.

Afin notamment d'alléger les contraintes économiques et d'encombrement liées à l'utilisation d'un système radar possédant une antenne nécessitant au moins 3 voies d'émissions selon une direction, l'invention crée au moins une voie de réception virtuelle.

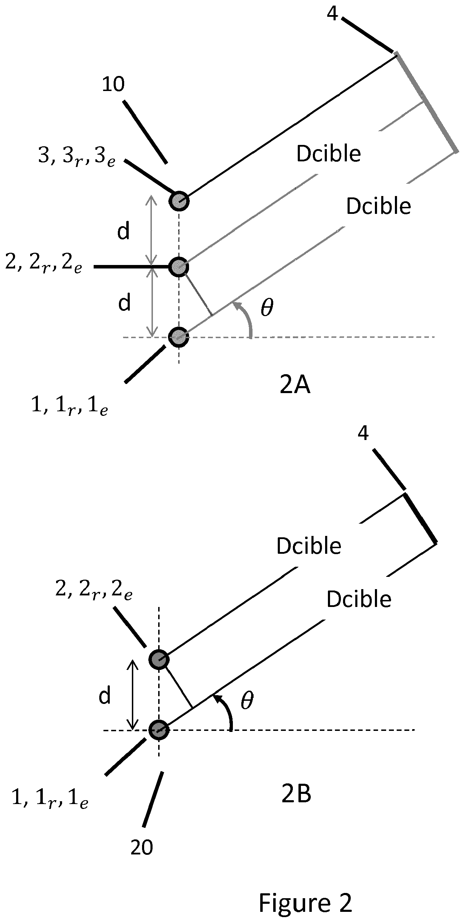

La figure 2B représente schématiquement un système radar 20 aéroporté par un hélicoptère recherchant une cible d'intérêt 4 en concurrence avec du fouillis de sol. Dans un autre exemple d'application ce système peut être porté par un avion, ou tout autre type de porteurs aériens. Le système radar 20 possède deux voies d'émission physiques ($1_e$, $2_e$), deux voies de réception ($1_r$, $2_r$) et des moyens de traitement, non représentés, permettant l'extraction des signaux reçus par les voies de réception. Dans le mode de réalisation de la figure 2B, les centres de phase (1, 2) des voies de réception et d'émission sont confondus et espacés d'une distance d dans une direction verticale.

Les deux voies d'émission émettent des impulsions radars sur deux longueurs $\lambda 1$ et $\lambda 2$ et la distance $D_{cible}$ entre le système radar et une cible d'intérêt 4 observée avec un angle $\theta$ est suffisante pour que les ondes radars réfléchies par la cible d'intérêt puissent être considérées comme planes lors de la réception par les voies d'émission.

La phase des signaux reçus vaut alors :

**Tableau 1**

| Voies d'émission | Voies de réception | Phase $\phi$ |
|---|---|---|
| $1_e$ | $1_r$ | $\frac{2\pi}{\lambda_1}(2 * D_{cible})$ |
| $1_e$ | $1_r$ | $\frac{2\pi}{\lambda_1}(2 * D_{cible} + d.sin\theta)$ |
| $2_e$ | $2_r$ | $\frac{2\pi}{\lambda_2}(2 * D_{cible} + d.sin\theta)$ |
| $2_e$ | $2_r$ | $\frac{2\pi}{\lambda_2}(2 * D_{cible} + 2.d.sin\theta)$ |

En prenant comme référence de phase celle reçue par $1_r$ et émise par $1_e$, la phase relative $\Delta\phi$ vaut :

**Tableau 2**

| Voies d'émission | Voies de réception | Phase relative $\Delta\phi$ |
|---|---|---|
| $1_e$ | $1_r$ | 0 |
| $1_e$ | $1_r$ | $\frac{2\pi}{\lambda_1}d.sin\theta$ |
| $2_e$ | $2_r$ | $\frac{2\pi}{\lambda_2}d.sin\theta + 4\pi D_{cible} \times \left(\frac{1}{\lambda_2} - \frac{1}{\lambda_1}\right)$ |

(suite)

| Voies d'émission | Voies de réception | Phase relative $\Delta\phi$ |
|---|---|---|
| $2_e$ | $2_r$ | $\frac{2\pi}{\lambda_2}2.d.sin\theta + 4\pi Dcible \times \left(\frac{1}{\lambda_2}-\frac{1}{\lambda_1}\right)$ |

Dans le mode de réalisation de la figure 2B, les longueurs d'onde émises par les deux voies d'émissions sont identiques et $\lambda 1 = \lambda 2 = \lambda$. Ainsi, en prenant à nouveau comme référence de phase celle reçue par $1_r$ et émise par $1_e$, la phase relative $\Delta\phi$ vaut:

**Tableau 3**

| Voies d'émission | Voies de réception | Phase relative $\Delta\phi$ |
|---|---|---|
| $1_e$ | $1_r$ | 0 |
| $1_e$ | $1_r$ | $\frac{2\pi}{\lambda}d.sin\theta$ |
| $2_e$ | $2_r$ | $\frac{2\pi}{\lambda}d.sin\theta$ |
| $2_e$ | $2_r$ | $\frac{2\pi}{\lambda}2.d.sin\theta$ |

On remarque que l'on obtient trois valeurs de phase relative indépendantes à partir de 4 signaux issus des 4 combinaisons possibles. Dans le mode de réalisation de la figure 2B, on obtient donc 3 valeurs de phase relative indépendantes égales à celles du mode de réalisation de la figure 2A, connu de l'art antérieur, dans lequel le système radar possède trois voies de réception ($1_e$, $2_e$, $3_e$) physiques et 3 voies d'émission ($1_e$, $2_e$, $3_e$), avec des centres de phase (1, 2, 3) des voies de réception et d'émission confondus et espacés d'une distance d dans une direction verticale. En effet, dans le mode de réalisation de la figure 2A, les trois voies d'émissions émettent des impulsions radars à la même longueur d'onde $\lambda$. En prenant comme référence de phase celle reçue par $1_r$ et émise par $1_e$, les valeurs de phase relative $\Delta\phi$ sont donc :

**Tableau 4**

| Voies d'émission | Voies de réception | Phase relative $\Delta\phi$ |
|---|---|---|
| $1_e$ | $1_r$ | 0 |
| $1_e$ | $2_r$ | $\frac{2\pi}{\lambda}d.sin\theta$ |
| $1_e$ | $3_r$ | $\frac{2\pi}{\lambda}2d.sin\theta$ |

Ainsi, le mode de réalisation de la figure 2B permet de créer de façon virtuelle une antenne à trois voies de réception (deux réelles et une virtuelle) de longueur double, à partir d'une antenne de longueur simple ne comportant physiquement que deux voies de réception et deux voies d'émission. La voie de réception virtuelle possède un centre de phase aligné selon la même direction verticale et séparé d'une distance d de la voie de réception $2_r$ et 2d de la voie de réception $1_r$.

Ainsi, avec le système radar 20 du mode de réalisation de la figure 2B, il est théoriquement possible de réaliser un traitement STAP afin de localiser et détecter des cibles de faibles SER et/ou en concurrence avec du fouillis de sol.

Cependant, la création d'une voie de réception virtuelle à partir de deux voies de réception physique suppose que les deux émetteurs fonctionnent sur la même longueur d'onde.

De plus, cela suppose que les deux voies d'émission émettent leurs signaux en même temps et donc que les voies de réception vont recevoir les signaux émis par les deux émetteurs simultanément (à plus ou moins la phase relative). Si les signaux sont identiques et que la même forme d'onde est utilisée par les 2 émetteurs, les signaux ne peuvent pas être séparés après réception et traitement. S'il est impossible d'attribuer par quelle voie d'émission a été émis un signal lors de la réception de ce signal après réflexion, il est impossible d'effectuer le raisonnement exposé précédemment et ainsi créer une troisième voie de réception virtuelles à partir de 2 voies physiques.

C'est pourquoi, dans le mode de réalisation de la figure 2B, les formes d'ondes émises par chaque voie d'émission sont orthogonales aux formes d'ondes émises par les autres voies d'émission. Ainsi, après réception dans les deux voies de réceptions des échos issus des deux voies d'émission, un filtrage adapté permet de conserver le signal émis par un seul des émetteurs, le signal reçu provenant de l'autre émetteur devant être rejeté.

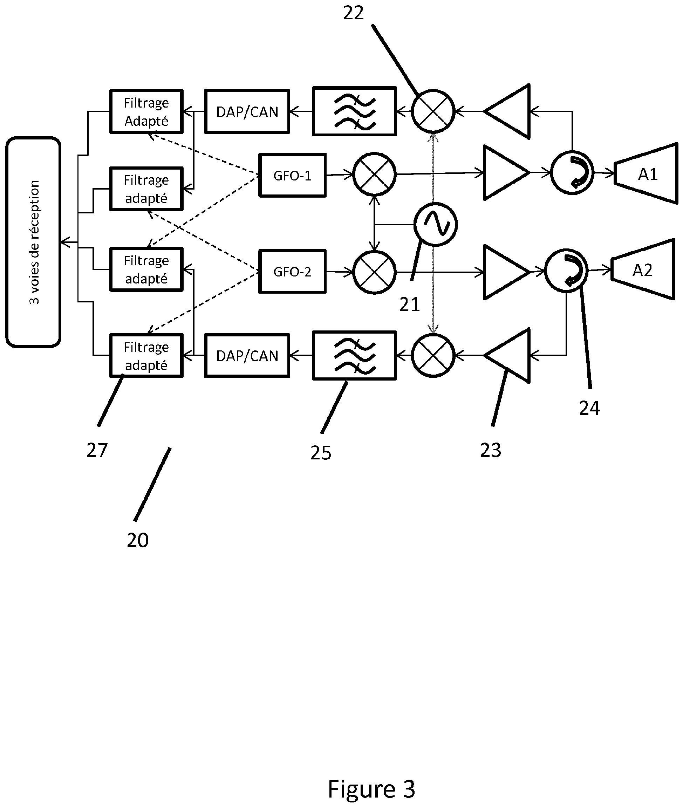

Un schéma du système radar 20 est illustré dans la figure 3. Dans cet exemple de réalisation, chacune des voies d'émission $1_e$, $2_e$ possède un générateur de formes d'ondes GFO-1, GFO-2 les formes d'ondes générées par un générateur étant orthogonales à celles émises par l'autre. Les formes d'ondes émises sont enregistrées et seront réutilisées lors du filtrage adapté. Ces signaux sont utilisés comme porteuses et sont combinées par un mélangeur 22 à un signal d'entrée provenant d'un oscillateur local afin de les transposer en impulsions radars à la longueur d'onde centrale $\lambda$. Chacun des deux signaux radars subit alors un traitement classique pour l'émission d'ondes radiofréquences. Dans le mode de réalisation de la figure 3, les signaux sont amplifiés par un amplificateur 23 qui préférentiellement est un amplificateur à faible bruit (LNA pour Low Noise Amplifier en anglais) puis traversent un circulateur 24 permettant d'éviter l'émission et la réception simultanées par les deux antennes A1, A2. Enfin, les antennes A1 et A2 émettent les impulsions radars, les formes d'ondes des impulsions émises par une antenne étant donc orthogonales à celles émises par l'autre antenne.

Les deux antennes A1, A2 réceptionnent les échos des impulsions radars émises par les deux voies d'émission et réfléchies par une cible. Dans chacune des deux voies de réception physiques ces impulsions radars suivent un traitement classique pour la réception et la numérisation d'ondes radiofréquences. Dans le mode de réalisation de la figure 3, les impulsions sont amplifiées par un amplificateur puis démodulées par le même oscillateur local 21 à l'aide d'un mélangeur, filtrées par un filtre de fréquence intermédiaire 25 et enfin numérisées à l'aide d'un Démodulateur Amplitude Phase / Convertisseur Analogique Numérique (DAP/CAN). Dans chacune des deux voies de réception grâce aux moyens de traitement 26, on réalise une compression des impulsions numérisées par filtrage adapté en effectuant leurs corrélations avec chacune des formes d'ondes générées dans les voies d'émission puis enregistrées. Ainsi, on obtient un pic de corrélation à chaque case distance où est situé un écho.

Le signal reçu par chaque voie de réception est une sommation des échos issus des signaux émis par les 2 voies d'émission. Les formes d'ondes émises par chacune des voies d'émission étant orthogonales, la corrélation des échos provenant de l'émetteur $1_e$ par la forme d'onde de l'impulsion émise par l'émetteur $2_e$ est alors négligeable. Il en va de même avec la corrélation des échos provenant de l'émetteur $2_e$ par la forme d'onde de l'impulsion émise par l'émetteur $1_e$. Ces impulsions sont donc « rejetées » par le filtrage adapté. A l'inverse, la corrélation des échos provenant de l'émetteur $1_e$ (respectivement $2_e$) par la forme d'onde de l'impulsion émise par l'émetteur $1_e$ (respectivement $2_e$) sera maximale.

Sur chacune des deux voies de réception on applique donc au signal numérisé un filtrage adapté à chacune des deux impulsions émises. On obtient quatre signaux, dont trois sont indépendants (voir tableau 3) qui permettent de former trois voies de réception équivalentes.

L'ensemble des étapes d'émission et de réceptions détaillées dans le mode de réalisation de la figure 3 peut être réalisé par diverses techniques connues de l'homme du métier.

Dans le mode de réalisation de la figure 2B et de la figure 3, les signaux émis par chacune des voies d'émissions possèdent des formes d'onde à bruit aléatoire sous la forme d'une séquence ou code aléatoire de valeurs de phase. Dans d'autres modes de réalisation, tout type de formes d'ondes orthogonales autre que les formes d'ondes à bruit peut être utilisé, tant que les signaux émis possèdent la même longueur d'onde centrale.

Notons $r_d$ la résolution distance du système radar 20 permettant de séparer les échos en distance radiale. On note $B$ la bande à émettre afin d'obtenir cette résolution $r_d = c/(2B)$, et $\tau$ la durée de l'impulsion à émettre afin d'obtenir le facteur de forme optimal du radar.

Dans le mode de réalisation de la figure 2B, les impulsions émises sont constituées de $N = B \times \tau$ points de valeurs de phase aléatoire valant 0 ou $\pi$. Cela permet d'obtenir un signal de bande B comme attendu. Les séquences émises sont enregistrées et utilisées pour réaliser la compression d'impulsion par filtrage adapté des signaux numérisés correspondant aux échos issus des signaux émis par les 2 voies d'émission.

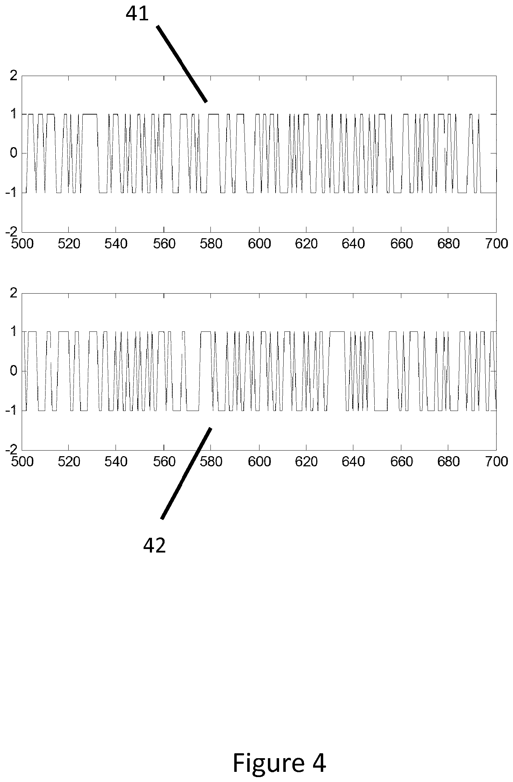

La figure 4 illustre deux exemples de séquence aléatoire de valeurs de phase zoomés 41 et 42 pour des impulsions émises par chacune des deux voies d'émission du système radar 20. En abscisse on trouve les numéros de cases distance et en ordonnée la valeur du code de phase. Dans ce mode de réalisation, la bande d'émission $B$ vaut 50$MHz$ et la durée des impulsions $\tau$ vaut 50 $\mu s$.

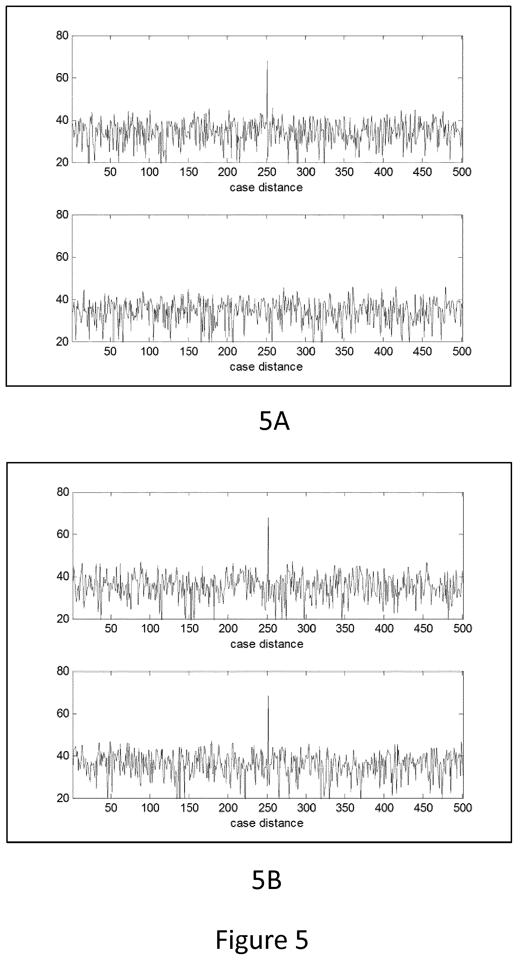

La figure 5 présente deux réponses impulsionnelles 5A et 5B de compressions d'impulsions par filtrage adapté dans deux cas différents avec des formes d'onde à bruit aléatoire similaire aux impulsions de la figure 4. En abscisse on trouve les numéros de case distance et en ordonnée le niveau en dB. Dans 5A et 5B, le graphe du haut correspond au filtrage adapté au signal émis par la voie d'émission $1_e$ d'un écho réceptionné par la voie de réception $1_r$, et le graphe

du bas correspond au filtrage adapté au signal émis par la voie d'émission $2_e$ d'un écho réceptionné par la voie de réception $1_r$. Dans 5A et 5B les échos sont simulés avec un rapport signal sur bruit $RSB = 0dB$ et proviennent d'une cible située à la case distance 250 du système radar.

Dans 5A, seule la voie d'émission $1_e$ émet une impulsion. En réalisant le filtrage adapté au signal émis par la voie d'émission $1_e$ d'un écho réceptionné par la voie de réception $1_r$ (5A graphe du haut), on observe sur le signal compressé le pic de corrélation à la case distance 250. On observe que le niveau de bruit thermique est suffisamment bas pour observer distinctement le pic de corrélation. Le pic de corrélation est environ 30 dB au-dessus du niveau de bruit thermique. Bien évidemment, aucune impulsion n'étant émise par la voie d'émission $2_e$, le filtrage adapté au signal émis par la voie d'émission $2_e$ d'un écho réceptionné par la voie de réception $1_r$ ne donne aucun pic de corrélation (5A graphe du bas).

Dans 5B, les deux voies d'émission $1_e$ et $2_e$ sont actives et émettent chacune une impulsion. Aussi, on observe que les deux filtrages adaptés aux deux signaux émis par les deux voies d'émission $1_e$, $2_r$ des échos réceptionnés par la voie de réception $1_r$ donnent tous les deux des pics de corrélation à la case distance 250.

En réalisant deux filtrages adaptés aux deux signaux émis par les deux voies d'émission $1_e$, $2_r$ des échos réceptionnés par la voie de réception $2_r$, on obtient donc quatre signaux, dont deux ne sont pas indépendants, permettant de former finalement trois voies de réception indépendantes. Ainsi, dans le mode de réalisation de la figure 2, il est possible de réaliser un traitement STAP en utilisant ces trois voies indépendantes et ainsi pouvoir détecter et localiser une cible d'intérêt en concurrence avec le fouillis de sol.

Le procédé de création d'une troisième voie de réception physique sur l'axe vertical du système radar 20 comprend :

- la génération de formes d'onde à bruit aléatoire sous la forme d'une séquence ou code aléatoire de valeurs de phase de 0 ou $\pi$, orthogonales entre elles ;

- la génération d'une impulsion radar de même longueur d'onde centrale dans chaque voie d'émission, chacune des voies d'émission émettant une des formes d'ondes différente;

- la compression des impulsions par filtrage adapté des échos acquis par chaque voie de réception physique en réalisant leurs corrélations avec chacune des formes d'ondes générées dans les voies d'émission.

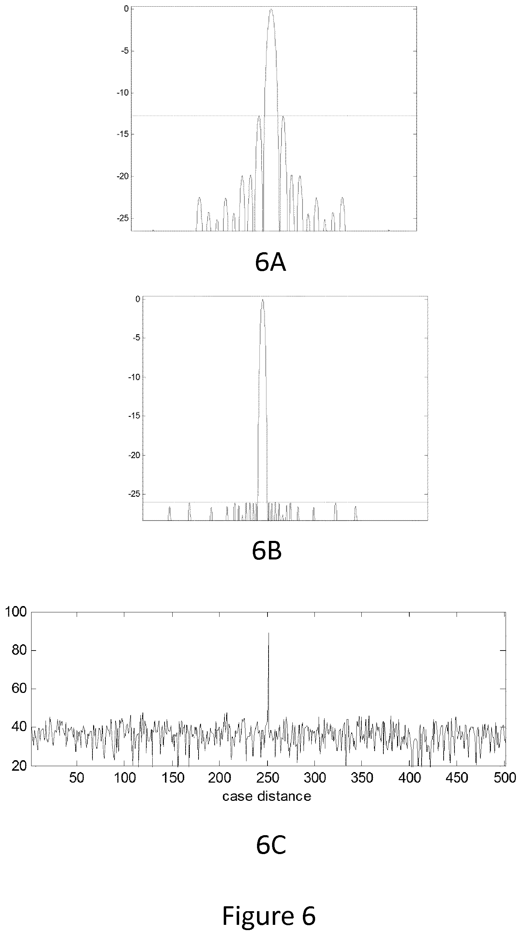

Sans traitement, le niveau des lobes secondaire des pics de corrélation obtenus après filtrage adapté des divers échos est élevé ce qui peut s'avérer gênant pour la détection de cibles proches les unes des autres ou de SER différentes. Le graphe 6A de la figure 6 présente un zoom de la réponse impulsionnelle dans un mode de réalisation où le système radar 20 émet des impulsions de bande d'émission $B=50MHz$ et de durée des impulsions $\tau=50~\mu s$ possédant des formes d'onde à bruit aléatoire similaire aux impulsions de la figure 4. Dans ce mode de réalisation le niveau des lobes secondaires de la classe 13 dBc.

Dans un mode de réalisation, l'abaissement du niveau des lobes secondaires des pics de corrélation se fait par optimisation de la séquence aléatoire de valeurs de phase. Pour cela, une valeur de la séquence de valeur de phase est modifiée aléatoirement, puis :

- Si le niveau des lobes secondaires n'a pas diminué, la séquence de valeurs de phase avant modification est conservée ; ou

- Si le niveau des lobes secondaires a diminué, la nouvelle séquence de valeurs de phase est conservée et on répète le processus en modifiant à nouveau aléatoirement une valeur de la séquence de valeur de phase et en observant le niveau des lobes secondaires.

Ce processus est répété jusqu'à stabilisation du niveau des lobes secondaires qui advient en général au bout de quelques milliers d'itérations (soit quelques minutes).

La figure 6B présente le résultat de ce processus itératif dans le même mode de réalisation que celui de la figure 6A et en modifiant de manière itérative une valeur de la séquence de code de phase de 0 à $\pi$ ou de $\pi$ à 0. Dans ce mode de réalisation, le niveau des lobes secondaires est abaissé à 26 dBc.

Dans un autre mode de réalisation, le niveau des lobes secondaires est abaissé en utilisant le filtrage de Weiner. Ce filtre permet une normalisation du niveau du spectre dans la bande utile et peut être pondéré pour maitriser le niveau des lobes secondaires du pic de corrélation. Dans ce cas, le niveau des lobes secondaires ne dépend que du choix de la pondération par l'utilisateur.

Dans un autre mode de réalisation, le niveau des lobes secondaires est abaissé en changeant la séquence de valeurs de phase entre chaque récurrence. Effectuer un traitement cohérent Doppler ou de post-intégration suivant l'axe des récurrences permet d'obtenir un gain cohérent, c'est-à-dire un gain relatif du pic principal provenant de la cible par rapport au niveau des pics secondaires. En effet, en changeant la séquence de valeur de phase entre chaque récurrence, le niveau des pics de corrélation est inchangé alors que le niveau des pics secondaires varie d'une récurrence à l'autre. Ainsi, le niveau des lobes secondaires va être abaissé de la valeur du gain de ce traitement.

La figure 6C présente le résultat obtenu après compression d'impulsion avec changement de code à chaque récurrence et traitement Doppler sur 128 récurrences dans le même mode de réalisation que celui de la figure 6A. Le niveau du pic de corrélation correspondant à la cible est inchangé mais le niveau du bruit est abaissé de 21 dB ce qui correspond au gain du traitement Doppler.

Dans un autre mode de réalisation, les voies d'émission et de réception sont alignées selon un axe horizontal. Ainsi, par le même procédé d'utilisation d'un système radar que celui exposé précédemment il est possible de créer au moins une voie de réception virtuelle sur l'axe horizontal.

Dans un autre mode de réalisation, la séquence des valeurs de phase aléatoires avec lesquelles sont générées les formes d'onde à bruit est codée sur 0 ou $2\pi$. Dans un autre mode de réalisation la séquence valeurs de phase avec lesquelles sont générées les formes d'onde à bruit est codée avec un code polyphasique, la séquence étant adaptée de manière à ce que les formes d'ondes émises par une voie d'émission soient orthogonales à celles émises par l'autre voie d'émission.

Dans un autre mode de réalisation, la compression par filtrage adapté n'est pas réalisée par la séquence de valeurs de phase théorique générée par les générateurs de formes d'onde mais par une séquence préalablement calibrée. Pour cela le signal émis est directement réinjecté dans les voies de réceptions et enregistré en sortie de DAP/CAN afin de servir de filtre adapté lors de la compression des impulsions acquises par les voies de réception. Cette étape de calibration de la séquence/forme d'onde permet de s'affranchir des distorsions liées à la chaîne d'émission/réception et ainsi maximiser l'efficacité du filtrage adapté.

Dans un autre mode de réalisation, les deux voies de réception et les deux voies d'émissions ne sont pas co-localisés (disposées au même endroit) mais elles sont chacune espacée d'une même distance d.

Dans un autre mode de réalisation, les voies d'émission et de réception sont alignées selon un axe horizontal. Ainsi, par le même procédé d'utilisation d'un système radar que celui exposé précédemment il est possible de créer au moins une voie de réception virtuelle sur l'axe horizontal.

**Revendications**

1. Procédé de création d'une voie de réception virtuelle dans un système radar (20) comprenant une antenne possédant deux voies de réception physiques ($1_r$, $2_r$) espacées d'une distance d selon une direction *x,* deux voies d'émission ($1_e$, $2_e$) espacées d'une même distance d selon la même direction *x* et des moyens de traitement (26), le procédé comprenant :

   a. la sélection dynamique de deux formes d'ondes différentes à bruit aléatoire sous la forme d'une séquence ou code aléatoire de valeurs de phase, orthogonales entre elles ;
   b. la génération d'une impulsion radar (41, 42) de même longueur d'onde centrale dans chaque voie d'émission, chacune des voies d'émission émettant une desdites deux formes d'ondes différente;
   c. l'acquisition par les voies de réception des échos provenant des impulsions émises par les voies d'émission et réfléchies par au moins une cible (4) ;
   d. la compression des impulsions par filtrage adapté des échos acquis par chaque voie de réception physique en réalisant leurs corrélations avec chacune des formes d'ondes générées dans les voies d'émission ; et
   e. la répétition des étapes a) à c) en changeant aléatoirement une des valeurs de chacun des codes de phase associés aux formes d'ondes générées jusqu'à obtenir une stabilisation du niveau des lobes secondaires de toutes les impulsions compressées.

2. Procédé de création d'une voie de réception virtuelle selon la revendication 1, dans lequel le code aléatoire de la phase des formes d'onde est binaire.

3. Procédé de création d'une voie de réception virtuelle selon la revendication 1, dans lequel le code aléatoire de la phase des formes d'onde peut prendre au moins 3 valeurs.

4. Procédé de création d'une voie de réception virtuelle selon l'une quelconque des revendications précédentes, dans lequel on réalise un traitement Doppler ou de Post-intégration suivant l'axe des récurrences en changeant les codes de phase de manière à diminuer le niveau de leurs lobes secondaires.

**5.** Procédé de création d'une voie de réception virtuelle selon l'une quelconque des revendications précédentes, dans lequel le niveau des lobes secondaires des impulsions compressées est optimisé par filtrage de Weiner.

**6.** Système radar (20) pour la mise en oeuvre d'un procédé de création d'une voie de réception virtuelle selon l'une quelconque des revendications précédentes, ledit système comprenant une antenne possédant deux voies de réception physiques ($1_r$, $2_r$) espacées d'une distance d selon une direction *x*, deux voies d'émission ($1_e$, $2_e$) espacées d'une même distance d selon la même direction *x* et des moyens de traitement (26), **caractérisée en ce que** ledit système radar est configuré pour que, dans chaque voie d'émission sont générées des impulsions radars (41, 42) de même longueur d'onde centrale, chacune des voies d'émission émettant des formes d'onde différentes à bruit aléatoire sous la forme d'une séquence ou code aléatoire de valeurs de phase, choisies dynamiquement, orthogonales aux formes d'onde des impulsions émises par l'autre voie d'émission, les moyens de traitement étant adaptés de manière à réaliser la compression par filtrage adapté des impulsions des échos acquis par chaque voie de réception physique en réalisant leurs corrélations avec chacune des formes d'ondes générées dans les voies d'émission, chacune des voies d'émission étant en outre configurée pour changer aléatoirement une des valeurs de chacun des codes de phase associés aux formes d'ondes générées jusqu'à obtenir une stabilisation du niveau des lobes secondaires de toutes les impulsions compressées.

**7.** Système radar selon la revendication précédente, dans lequel les voies d'émission et de réception sont co-localisés

**8.** Système radar selon l'une quelconque des revendications 6 et 7, dans lequel chacune des voies d'émissions comprend un générateur de forme d'ondes (GFO-1, GFO-2) générant les formes d'ondes orthogonales, un mélangeur (22) mélangeant un signal provenant d'un oscillateur local (21) et un signal provenant du générateur de forme d'onde, un amplificateur (23) amplifiant le signal provenant du mélangeur, le signal amplifié permettant l'émission d'impulsions radars par l'antenne par le biais d'un circulateur (24) permettant à l'antenne (A1, A2) de fonctionner en émission et réception et chacune des n voies de réception comprend un amplificateur amplifiant le signal reçu par la voie de réception, un mélangeur mélangeant un signal provenant d'un oscillateur local et le signal provenant de l'amplificateur de la voie de réception, un Démodulateur Amplitude Phase / Convertisseur Analogique Numérique (DAP/CAN) permettant aux moyens de traitements (27) de réaliser la compression numérique des impulsions par filtrage adapté.

**Patentansprüche**

**1.** Verfahren zum Erzeugen eines virtuellen Empfangskanals in einem Radarsystem (20), das eine Antenne mit zwei physikalischen Empfangskanälen ($1_r$, $2_r$), die in einem Abstand d in einer x-Richtung beabstandet sind, zwei Sendekanälen ($1_e$, $2_e$), die in einem gleichen Abstand d in der gleichen x-Richtung beabstandet sind, und Verarbeitungsmittel (26) umfasst, wobei das Verfahren Folgendes umfasst:

a. dynamisches Auswählen von zwei verschiedenen Wellenformen mit Zufallsrauschen in Form einer Zufallsfolge oder eines Zufallscodes von Phasenwerten, wobei diese Wellenformen orthogonal zueinander sind;
b. Erzeugen eines Radarimpulses (41, 42) mit der gleichen Mittenwellenlänge in jedem Sendekanal, wobei jeder der Sendekanäle eine der beiden unterschiedlichen Wellenformen aussendet;
c. Erfassen, über die Empfangskanäle, der Echos von den Impulsen, die von den Sendekanälen ausgesendet und von mindestens einem Ziel (4) reflektiert werden;
d. Komprimieren der Impulse durch angepasstes Filtern der von jedem physischen Empfangskanal erfassten Echos durch Realisieren ihrer Korrelationen mit jeder der in den Sendekanälen erzeugten Wellenformen; und
e. Wiederholen der Schritte a) bis c) unter zufälliger Änderung eines der Werte jedes der mit den erzeugten Wellenformen assoziierten Phasencodes, bis sich der Pegel der Nebenkeulen aller komprimierten Impulse stabilisiert hat.

**2.** Verfahren zum Erzeugen eines virtuellen Empfangskanals nach Anspruch 1, wobei der Zufallscode der Phase der Wellenformen binär ist.

**3.** Verfahren zum Erzeugen eines virtuellen Empfangskanals nach Anspruch 1, wobei der Zufallscode der Phase der Wellenformen mindestens 3 Werte annehmen kann.

**4.** Verfahren zum Erzeugen eines virtuellen Empfangskanals nach einem der vorherigen Ansprüche, wobei eine Doppler- oder Post-Integrationsbehandlung entlang der Rekursionsachse unter Änderung der Phasencodes durchgeführt wird, so dass der Pegel ihrer Nebenkeulen abnimmt.

5. Verfahren zum Erzeugen eines virtuellen Empfangskanals nach einem der vorherigen Ansprüche, wobei der Pegel der Nebenkeulen der komprimierten Impulse durch Weiner-Filterung optimiert wird.

6. Radarsystem (20) zur Durchführung eines Verfahrens zum Erzeugen eines virtuellen Empfangskanals nach einem der vorherigen Ansprüche, wobei das System eine Antenne mit zwei in einem Abstand $d$ in einer Richtung $x$ beabstandeten physischen Empfangskanälen ($1_r$, $2_r$), zwei in einem gleichen Abstand $d$ in der gleichen Richtung $x$ beabstandeten Sendekanälen ($1_e$, $2_e$) und Verarbeitungsmitteln (26) umfasst, **dadurch gekennzeichnet, dass** das Radarsystem so konfiguriert ist, dass in jedem Sendekanal Radarimpulse (41, 42) mit der gleichen Mittenwellenlänge erzeugt werden, wobei jeder der Sendekanäle unterschiedliche Wellenformen mit Zufallsrauschen in Form einer Zufallsfolge oder eines Zufallscodes von Phasenwerten aussendet, dynamisch ausgewählt, wobei die Wellenformen orthogonal zu den Wellenformen der von dem anderen Sendekanal ausgesendeten Impulse sind, wobei die Verarbeitungsmittel zum Komprimieren der Impulse der von jedem physischen Empfangskanal erfassten Echos durch angepasste Filterung durch Realisieren ihrer Korrelationen mit jeder der in den Sendekanälen erzeugten Wellenformen ausgelegt sind, wobei jeder der Sendekanäle außerdem so konfiguriert ist, dass er zufällig einen der Werte jedes der mit den erzeugten Wellenformen assoziierten Phasencodes ändert, bis sich der Pegel der Nebenkeulen aller komprimierten Impulse stabilisiert hat.

7. Radarsystem nach dem vorherigen Anspruch, wobei der Sende- und der Empfangskanal kolokalisiert sind.

8. Radarsystem nach einem der Ansprüche 6 und 7, wobei jeder der Sendekanäle einen die orthogonalen Wellenformen erzeugenden Wellenformgenerator (GFO-1, GFO-2), einen ein Signal von einem lokalen Oszillator (21) und ein Signal vom Wellenformgenerator mischenden Mischer (22) und einen das Signal aus dem Mischer verstärkenden Verstärker (23) umfasst, wobei das verstärkte Signal das Senden von Radarimpulsen durch die Antenne über einen Zirkulator (24) ermöglicht, der es zulässt, dass die Antenne (A1, A2) sowohl im Sende- als auch im Empfangsbetrieb arbeitet, und jeder der n Empfangskanäle einen das vom Empfangskanal empfangene Signal verstärkenden Verstärker, einen ein Signal von einem lokalen Oszillator und das Signal vom Verstärker des Empfangskanals mischenden Mischer, einen Amplituden-Phasen-Demodulator/Digitalen Analog-Wandler (DAP/CAN) umfasst, der es zulässt, dass die Verarbeitungsmittel (27) die digitale Kompression der Impulse durch angepasste Filterung realisieren.

## Claims

1. A method for creating a virtual reception channel in a radar system (20) comprising an antenna having two physical reception channels ($1_r$, $2_r$) spaced apart by a distance $d$ in a direction $x$, two emission channels ($1_e$, $2_e$) spaced apart by a same distance $d$ in the same direction $x$ and processing means (26), the method comprising:

    a. dynamically selecting two different waveforms containing random noise taking the form of a random succession or code of phase values, said waveforms being orthogonal to each other;
    b. generating a radar pulse (41, 42) of identical central wavelength in each emission channel, each of the emission channels emitting one of said two different waveforms;
    c. acquiring, with the reception channels, echoes due to pulses emitted by the emission channels and reflected by at least one target (4);
    d. compressing the pulses by matched filtering of the echoes acquired by each physical reception channel, by performing their correlation with each of the waveforms generated in the emission channels; and
    e. repeating steps a) to c) while randomly changing one of the values of each of the phase codes associated with the generated waveforms until the level of the sidelobes of all the compressed pulses has stabilised.

2. The method for creating a virtual reception channel according to claim 1, wherein the random code of the phase of the waveforms is binary.

3. The method for creating a virtual reception channel according to claim 1, wherein the random code of the phase of the waveforms may take a least 3 values.

4. The method for creating a virtual reception channel according to any one of the preceding claims, wherein Doppler or post-integration processing is carried out along the axis of the recurrences while changing the phase codes so as to decrease the level of their sidelobes.

5. The method for creating a virtual reception channel according to any one of the preceding claims, wherein the level of the sidelobes of the compressed pulses is optimised by Weiner filtering.

6. A radar system (20) for implementing a method for creating a virtual reception channel according to any one of the preceding claims, wherein the system comprises an antenna having two physical reception channels ($1_r$, $2_r$) spaced apart by a distance d in a direction $x$, two emission channels ($1_e$, $2_e$) spaced apart by the same distance d in the same direction $x$ and processing means (26), **characterised in that** said radar system is configured so that, in each emission channel, radio pulses (41, 42) of given central wavelength are generated, each of the emission channels emitting different waveforms containing random noise taking the form of a random succession or code of phase values, which are chosen dynamically, said waveforms being orthogonal to the waveforms of the pulses emitted by the other emission channel, the processing means being adapted so as to carry out the compression by matched filtering of the pulses of echoes acquired by each physical reception channel, by performing their correlation with each of the waveforms generated in the emission channels, each of the emission channels being further configured to randomly change one of the values of each of the phase codes associated with the generated waveforms until the level of the sidelobes of all the compressed pulses has stabilised.

7. The radar system according to the preceding claim, wherein the emission and reception channels are co-localised.

8. The radar system according to any one of claims 6 and 7, wherein each of the emission channels comprises a waveform generator (GFO-1, GFO-2) that generates the orthogonal waveforms, a mixer (22) that mixes a signal delivered by a local oscillator (21) and a signal delivered by the waveform generator, an amplifier (23) that amplifies the signal from the mixer, the amplified signal allowing radar pulses to be emitted by the antenna via a circulator (24) allowing the antenna (A1, A2) to operate in emission and reception, and each of the n reception channels comprises an amplifier that amplifies the signal received by the reception channel, a mixer that mixes a signal delivered by a local oscillator and the signal from the amplifier of the reception channel, an amplitude-phase demodulator/analogue-digital converter (APD/ADC) that allows the processing means (27) to carry out the digital compression of the pulses by matched filtering.

Figure 1

10

$3, 3_r, 3_e$

$2, 2_r, 2_e$

Dcible

Dcible

d

d

$\theta$

4

2A

$1, 1_r, 1_e$

$2, 2_r, 2_e$

Dcible

Dcible

d

$\theta$

4

2B

$1, 1_r, 1_e$

20

Figure 2

Figure 3

Figure 4

5A

5B

Figure 5

6A

6B

case distance

6C

Figure 6

**EP 3 654 059 B1**

## RÉFÉRENCES CITÉES DANS LA DESCRIPTION

**Documents brevets cités dans la description**

- US 2010214152 A1
- US 2010328157 A1

- EP 2816369 A1